(19) Europäisches Patentamt / European Patent Office / Office européen des brevets

(11) **EP 4 589 305 A1**

(12) **EUROPEAN PATENT APPLICATION**

(43) Date of publication:
   **23.07.2025 Bulletin 2025/30**

(21) Application number: **24382050.3**

(22) Date of filing: **19.01.2024**

(51) International Patent Classification (IPC):
   ***G01Q 30/04*** (2010.01)    ***G01Q 60/36*** (2010.01)
   ***G06N 3/045*** (2023.01)    ***G06V 10/82*** (2022.01)

(52) Cooperative Patent Classification (CPC):
   **G01Q 30/04; G01Q 60/366; G06N 3/045;
   G06V 10/82**

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **GE KH MA MD TN**

(71) Applicant: **Consejo Superior De Investigaciones
   Científicas -
   CSIC
   28006 Madrid (ES)**

(72) Inventors:
   • **García García, Ricardo
     Madrid (ES)**
   • **Tejedor Reyes, Jaime
     Madrid (ES)**

(74) Representative: **Pons IP
   Glorieta Rubén Darío 4
   28010 Madrid (ES)**

(54) **MACHINE LEARNING METHOD FOR PROCESSING FORCE-DISTANCE CURVES IN FORCE MICROSCOPY**

(57)    The present invention relates to a method for processing force versus distance curves obtained by means of a force microscope and processing said curves using a machine learning method based on the chaining of two functional multilayer perceptron neural networks. The method allows for rapid processing of thousands of experimental curves and eliminates errors associated with the nonlinearity of the AFM tip displacement signal. This step allows the precise calculation of various mechanical and nanomechanical properties such as Young's modulus, bulk modulus or flow coefficient. Likewise, the method of the invention facilitates the measurement of nanomechanical properties of materials in real time.

FIG. 5

**Description**

**OBJECT OF THE INVENTION**

The present invention falls within the scope of the development of force microscopy methods, these methods being applied to samples of polymers, biological cells or tissues, whether in a liquid or gaseous medium. The present invention has application in fields such as microscopy, clinical research, mechano-biology, cell biology, nanomedicine or the development of advanced polymers.

**STATE OF THE ART**

Force microscopy is the most used technique for the characterisation of mechanical properties at the nanometric scale(R. Garcia, Nanomechanical mapping of soft materials with the atomic force microscope: methods, theory and applications, Chem. Soc. Rep. 49, 5850-5884 (2020); G. Stan, S. W. King, Atomic force microscopy for nanoscale mechanical property characterization, J. Vac. Sci. Technol. B 38, 060801 (2020); M. Krieg, G. Flaschner, D. Alsteens, B. M. Gaub, W.H. Roos, G.J.L. Wuite, H. E Gaub, C. Gerber, Y. F Dufrêne, D. J Müller, Atomic force microscopy-based mechanobiology, Nature Reviews Physics 1, 41-57 (2019)). As a consequence of their high resolution (lateral and vertical), force microscopes (AFM) have been introduced both in research laboratories and in quality control departments in various industrial sectors such as microelectronics, polymers, food, pharmacy, among others.

One of the singularities of the force microscope is its ability for providing measurements and maps of both topographic properties and mechanical properties of a material. Among the mechanical properties are adhesion forces, Young's modulus, bulk modulus, coefficient of viscosity or different mechanical parameters related to the flexibility of the material under study. Thus, a wide variety of methods have been developed in this area, for example, methods based on measurements of force versus displacement curves (H.J. Butt, B. Capella, M. Kappl, "Force Measurements with the Atomic Force Microscope: Technique, Interpretation and Applications" Surf. Sci. Rep. 59 1-152 (2005); R. Garcia, Nanomechanical mapping of soft materials with the atomic force microscope: methods, theory and applications, Chem. Soc. Rep. 49, 5850-5884 (2020)).

The force versus distance curve (FDC) acquisition method, also known as AFM nanoindentation, is widely used for characterising the nanomechanical properties of polymers, biomolecules, cells, hybrid materials, and nanostructures. This method requires acquiring many curves to obtain good precision in the measurement of mechanical properties, in particular, with very soft samples such as biological cells or tissues. This process involves high processing times (hours) which limits its applications in fields such as biomedicine or clinical analysis.

The present invention is based on the incorporation of a machine learning method for processing force versus distance curves and define the nanomechanical properties. So that the processing time is reduced and the precision in the definition of mechanical properties is increased by considering non-linear effects in the displacement signal.

Recently, several machine learning methods have been proposed for processing data obtained through AFM. For example, several contributions have proposed methods for classifying images of biomolecules, in particular cells, and associate the same with different types of physiological states and/or pathologies (S. Prasad, A. Rankine, T. Prasad, P. Song, M. E. Dokukin, N. Makarova, V. Backman, and I. Sokolov, Atomic Force Microscopy Detects the Difference in Cancer Cells of Different Neoplastic Aggressiveness via Machine Learning, Adv. NanoBiomed Res. 1, 2000116 (2021); K. Ito, Y. Ogawa, K. Yokota, S. Matsumura, T. Minamisawa, K. Suga, K. Shiba, Y. Kimura, A. Hirano-Iwata, Y. Takamura, T. Ogino, Host Cell Prediction of Exosomes Using Morphological Features on Solid Surfaces Analyzed by Machine Learning, J. Phys. Chem. B 122, 6224-6235 (2018). Scientific activity in machine learning methods dedicated to classifying AFM images has been summarised by several authors (I. Azuri, I. Rosenhek-Goldiani, N. Regev-Rudzki, G. Fantner, S. R. Cohen, The role of convolutional neural networks in scanning probe microscopy: a review, Beilstein J. Nanotechnol. 12, 878 (2021)).

Likewise, a machine learning method has been proposed to define the most appropriate elastic contact mechanics model to simulate the deformation of a cell to the force exerted by the AFM (L.T.P. Nguyen, B.H. Liu, Machine learning framework for determination of elastic modulus without contact model fitting, European Journal of Mechanics / A Solids 94, 104579 (2022).

Finally, several approaches based on machine learning methods have been proposed to determine mechanical properties based on AFM experiments. For example, a comparison has been made between several regressors, including the one known as 'Gaussian process regression' to define the elastic modulus of cells based on force versus distance curves (L.T.P. Nguyen, B. H. Liu, Machine learning framework for determination of elastic modulus without contact model fitting, Inter. J. Solids and Structures 256, 111976 (2022)). Machine learning methods have also been applied to estimate the force exerted on polymers using dynamic modes such as tapping mode AFM(A. Chandrashekar, P. Belardinelli, M. A. Bessa, U. Staufer, F. Alijani, Quantifying nanoscale forces using machine learning in dynamic atomic force microscopy, Nanoscale Adv. 4, 2134 (2022)).

Previous methods dedicated to classifying images of biomolecules do not provide information about the nanomechanical properties thereof. Moreover, the methods that do contemplate the characterisation of mechanical properties from the FDC curves only provide the elastic modulus. It is known that the mechanical response of a cell is viscoelastic and cannot be described by Young's modulus (R. Garcia, Nanomechanical mapping of soft materials with the atomic force microscope: methods, theory and applications, Chem. Soc. Rep. 49, 5850-5884 (2020)). Furthermore, the fact that the indentation signal may have a non-linear behaviour with respect to the displacement of the piezoelectric nor that this may be carried out at different speeds or frequencies is not contemplated.

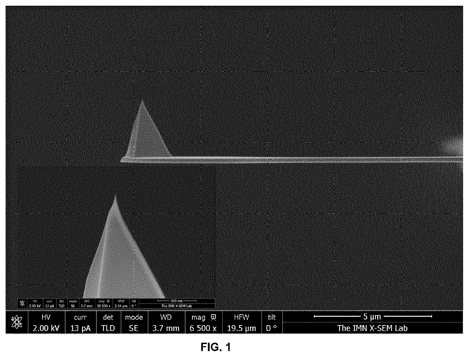

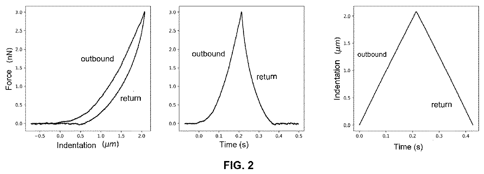

Figure 1 shows a scanning electron microscopy image of a microlever used in force microscopy to measure cells (model Fastscan_D, Nano sensors). Figure 2 shows an example of an experimental curve of force versus distance (a) and the same curve versus time (b). The tip displacement signal is shown in panel c. The force curves have been measured with an AFM on a living HeLa type cell.

In general in nano-indentation measurements, the nanomechanical properties of materials, for example, cells, are determined by adjusting a force-distance curve to a contact mechanics model. Since cells are viscoelastic materials, the contact mechanics model to describe them will have to be viscoelastic. It has been shown that the model known as 'power-law rheology' (PLR) is the most optimal to simultaneously simulate the outbound and return curves measured on a cell (PD Garcia, CR Guerrero, R Garcia, Nano rheology of living cells measured by AFM-based force-distance curves, Nanoscale 12 (16), 9133-9143 (2020); J.G. Sanchez, F.M. Espinosa, R. Miguez, R. Garcia, The viscoelasticity of adherent cells follows a single power-law with distinct local variations within a single cell and across cell lines, Nanoscale 13, 16339-16348 (2021).

A PLR model is considered here comprising the ground effect correction to minimise the influence of the Young's modulus of the rigid substrate on the nanomechanical properties of the material under study (P.D. Garcia, R. Garcia, Determination of the viscoelastic properties of a single cell cultured on a rigid support by force microscopy, Nanoscale 10, 19799-19809 (2018). In this model and for the case of a semi-infinite sample, the force as a function of the indentation $I$ is calculated using:

$$F(I) = \begin{cases} \alpha \int_0^t \psi(t - t') \frac{d}{dt'}\left(I^\beta(t')\right) dt' & t \leq t_{max} \\ \alpha \int_0^{t_1(t)} \psi(t - t') \frac{d}{dt'}\left(I^\beta(t')\right) dt' & t > t_{max} \end{cases}$$

$$(E.1)$$

which in the event of a conical tip and a linear indentation profile with speed ($v$) transforms into:

$$F(t) = \begin{cases} \frac{4\tan\theta}{\pi(1-v^2)} E_0\, v^2\, t^2 \left(\frac{t}{t_0}\right)^{-\gamma} \frac{\Gamma(2)}{\Gamma(3-\gamma)} & t \leq t_{max} \\ \frac{2\tan\theta}{\pi(1-v^2)} v^2 \frac{E_0}{\Gamma(1-\gamma)} \left(\frac{t_0}{t}\right)^\gamma t_1^2\, {}_2F_1\left(2,\gamma;3;\frac{t_1}{t}\right) & t > t_{max} \end{cases}$$

$$(E.2.)$$

Wherein $\alpha$ is a coefficient that depends on the geometry of the indentation and the Poisson's modulus of the material, $\beta$ is a coefficient that depends on the geometry of the indentation, $tmax$ is the time for which the indentation reaches its maximum value and $t_1(t)$ is the solution obtained by applying Ting's condition (T.C.T. Ting. The Contact Stresses Between a Rigid Indenter and a Viscoelastic Half-Space. J. Appl. Mech. 33, 845-854 (1996).

$$\int_{t_1(t)}^t \psi(t - t')v(t')dt' = 0 \qquad\qquad (E.3)$$

The relaxation function $\psi(t - t')$ for the PLR model takes the form:

$$\psi(t) = \frac{E_0}{\Gamma(1-\gamma)} \left(\frac{t}{t_0}\right)^{-\gamma}$$

$$(E.4)$$

wherein r is the Euler gamma function, $t_0$ is a reference time, to = 1 s is usually taken to facilitate calculations; $E_0$ is the bulk modulus and $\gamma$ is the flow coefficient that varies between 0 and 1. For an elastic material it takes the value $\gamma$=0 and for a Newtonian liquid it takes the value $\gamma$= 1.

For finite materials, i.e., with a thickness $h$ the force equations transform into:

$$F(I) = \sum_j \alpha_j \int_0^t \psi(t - t') \frac{d}{dt'}\left(I^{\beta_j}(t')\right) dt' \qquad t \le t_{max}$$

(E.5)

$$F(I) = \sum_j \alpha_j \int_0^{t_1(t)} \psi(t - t') \frac{d}{dt'}\left(I^{\beta_j}(t')\right) dt' \qquad t > t_{max}$$

(E.6)

wherein $\alpha_j$ is a coefficient that depends on the geometry of the tip, the Poisson's coefficient of the material (v=0.5 for biological cells and tissues) and the thickness of the cell (h). Moreover, $\beta_j$ just depends on the geometry of the tip. The coefficients for a conical tip are detailed in table 1:

| j | $\alpha_j/c$ | $\beta_j$ |
|---|---|---|
| 0 | 1 | 2 |
| 1 | 0.721 $\varepsilon$ | 3 |
| 2 | 0.650 $\varepsilon^2$ | 4 |
| 3 | 0.491 $\varepsilon^3$ | 5 |
| 4 | 0.225 $\varepsilon^4$ | 6 |

Table 1 shows the coefficients of ground effect correction for a conical tip of semi-angle θ. The expansion term ε is defined as $\epsilon = \dfrac{\tan\theta}{h}$ wherein h is the thickness of the material and the proportionality constant is $c = \dfrac{8\,\tan\theta}{3\pi}$.

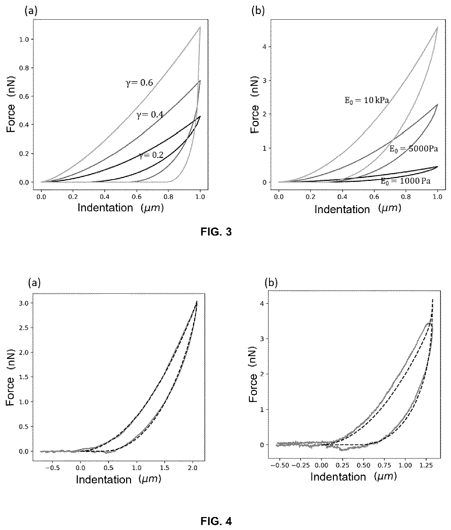

Figure 3 shows force-distance curves obtained according to the PLR model for a semi-angle conical tip $\theta = 18°$. The figure shows curves with different values of the flow coefficient and fixed bulk modulus. $E_0$ = 1000 Pa (a) and curves with different values of the bulk modulus and fixed flow coefficient $\gamma$ = 0.2 (b).

It is difficult to find analytical solutions for the integral equations E.5 and E.6. Specifically, it has only been possible to obtain the same for triangular type displacement signals. Hereinafter the displacement signal will be called indentation signal or simply indentation. In most cases it is necessary to make numerical adjustments. These adjustments require a high computational effort if the number of experimental measurements is very large. Hence the relevance of developing alternative processes such as the one proposed in the present invention. Figure 4 illustrates the experimental curve adjustment to the PLR model assuming the signal is triangular. For an FDC curve taken at a speed v = 10 μm/s, the values $E_0$ = 1616 Pa and y =0.14 are deduced (figure 4a). For an FDC curve taken at a speed v= 300 μm/s, the values $E_0$ = 3237 Pa and y =0.16 are deduced (figure 4b). The theoretical curve of the PLR model reproduces the experimental curve at v =10 μm/s quite well. The precision of the adjustment can be defined by the coefficient of determination ($R^2$=0.999). However, the theoretical adjustment obtained on an experimental FDC curve of the same cell, but using a displacement signal with a speed of 300 μm/s (Figure 4b) is considerably worse ($R^2$=0.971). The difference lies in the fact that at high speeds the profile of the displacement signal does not follow an exact triangular signal.

In the current state of the art, until now no machine learning methods have been developed that allow FDC curves to be processed and obtaining viscoelastic properties therefrom. This limitation prevents rapid simultaneous mapping of the topography and nanomechanical properties of cells and tissues. There is, therefore, in the present technical field, the need to resolve this limitation, which would considerably increase the capabilities of force microscopes and their applications in biomedicine.

The present invention provides a solution to this need, through a novel method for processing curves with arbitrary displacement signals and obtaining viscoelastic nanomechanical properties in experiments carried out at different frequencies and speeds.

## DESCRIPTION OF THE INVENTION

The present invention relates to a method for processing force versus distance curves obtained by a force microscope using a machine learning method based on the chaining of two functional multilayer perceptron neural networks. The method of the invention expedites the definition of mechanical properties of soft materials that could be done in real time, in particular, biological cells and tissues. In addition, it suppresses the errors associated with the nonlinearity of the displacement signal, which allows the precise calculation of various mechanical and nanomechanical properties, such as Young's modulus, bulk modulus or the flow coefficient.

It is an object of the present invention a machine learning method for quickly processing the FDC (force versus distance) curves obtained on viscoelastic materials and obtaining nanomechanical properties thereof. This object is achieved with the method of claim 1. Different embodiments and aspects of the present invention are indicated in the dependent claims. More specifically, the present invention is based on combining two complementary elements. On the one hand, it consists of the use of two chained neural networks for processing the FDC curves and obtaining the nanomechanical properties of the material. On the other hand, it is considered that the displacement signal of the FDC curves does not have to be triangular.

Neural networks known as functional multilayer perceptron (functional MLP) are used as a machine learning method. In this network, the constituent elements are the layers, and within the layers, the neurons (nodes), in addition to the activation function. The first layer includes the input data fed to the network and the last layer are the results of the nanomechanical properties provided by the network. The intermediate layers allow relationships to be established between the neurons of the first neighbour layers. The output of a neuron is a weighted result of the neurons in the previous layer filtered by the activation function. The weighting coefficients are optimised to minimise variations with respect to the training data.

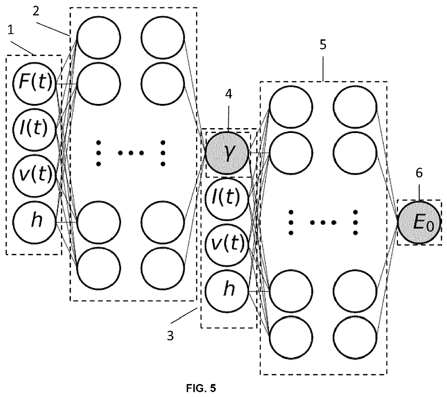

Figure 5 shows the general structure of the networks and their chaining according to the invention. The first network is used to determine the flow coefficient and the second network allows the bulk modulus to be defined. Input parameters for the learning method will be the values of force, indentation, speed and thickness of the material.

As displacement or indentation signs, those that meet the following requirements will be considered: (1) The signal is null at the beginning and at the end and always takes positive values. (2) The signal is divided into two sections, approach and retreat. (3) The signal has a maximum. (4) Spatial and time signals are normalised to 1. For this purpose $t \in (0, 1)$ and the maximum indentation is normalised to 1.

More specifically, the method of the invention comprises carrying out the following steps:

a) Generating thousands of training FDC curves from the theoretical expressions of a viscoelastic model. The curves will be generated using different values of the model parameters, the thickness of the material, the value of the maximum indentation and the time in which the AFM tip is in contact with the material.

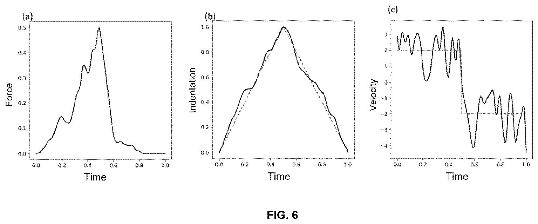

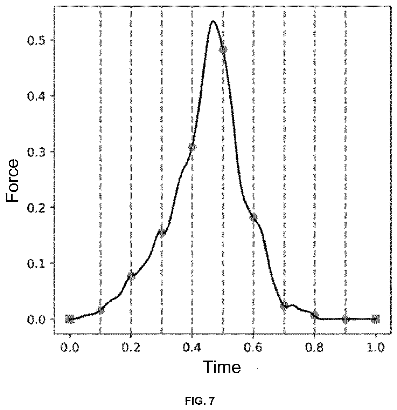

b) Adimensionalising the forces and indentations. Figure 6 shows several examples of the normalised theoretical curves used to train the network. The indentation signs for the above curves are shown in Figure 7;

c) using indentation signs in accordance with the following mathematical conditions:

1) The indentation reaches a maximum value at one point $p$ of the normalisation interval $(0, 1)$, i.e.,

$$I'(p) = 0 \quad p \in (0,1) \qquad (E.7)$$

$$\begin{cases} I'(t) > 0 & if \quad t < p \\ I'(t) < 0 & if \quad t > p \end{cases} \qquad (E.8)$$

2) The initial indentation takes a value very close to zero:

$$I(0) = \epsilon I(p) \ (E.9)$$

3) The indentation takes a value of zero or very close to zero in $t = 1$:

$$I(1) = \epsilon' I(p) \qquad (E.10)$$

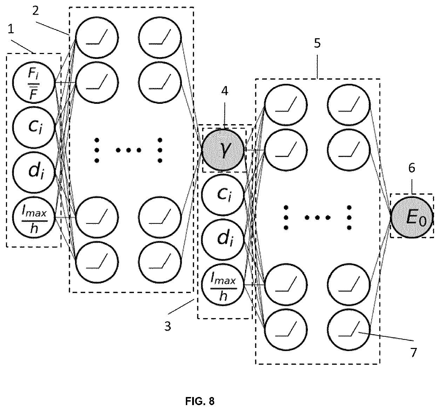

d) sampling the data from the training FDC curves. An example of the type of sampling used in the patent is provided in Figure 8;

e) the aforementioned FDC curves will be used to train a machine learning method based on functional multilayer perceptron, wherein the first layer is formed by the input data and the last layer is formed by the output data. The intermediate layers allow non-linear interactions between neurons in neighbouring layers to be carried out. The output of a neuron is a weighted sum of the values of the previous layer and is filtered by an activation function;

f) carrying out the process of defining the material parameters in a chained manner. First, a neural network is developed to determine the flow coefficient;

g) the above result is the input of another neural network that is used to determine the bulk modulus;

h) using a metric of the averaged relative error: mean absolute percentage error (MAPE), to quantify the precision of the method in the value of the bulk modulus

$$\text{MAPE} = \frac{100}{n} \sum_{i=1}^{n} \frac{\left| E_{true}^{i} - E_{pred}^{i} \right|}{E_{true}^{i}}$$

(E.11)

wherein *Etrue* is the theoretical value and *Epred* the value provided by the neural network.

i) using the normalised standard deviation (NRMSE) to quantify the precision obtained to estimate the flow coefficient

$$\text{NRMSE} = \frac{100}{\overline{\gamma_{true}}} \sqrt{\frac{1}{n} \sum_{i=1}^{n} \left( \gamma_{true}^{i} - \gamma_{pred}^{i} \right)^{2}}$$

(E.12)

wherein $\gamma_{true}$ is the theoretical value and $\gamma_{pred}$ the value provided by the neural network;

j) completing the process when the above values are less than 5%;

k) applying the machine learning method to experimental FDC curves obtained on the same material. This will require removing residual hydrodynamic contributions that are present in the experimental data; and

l) obtaining the values of the bulk modulus and flow coefficient of the material from the experimental curves.

It is important to highlight the fact that the method of the invention, as stated in the previous lines, allows very fast and precise processing to automatically process thousands of experimental force versus distance curves.

In a preferred embodiment of the invention, the method comprises analysing the experimental curves obtained on biological cells and tissues. In another preferred embodiment of the invention, in step (a) the theoretical results of the PLR model obtained for a spherical tip are used to train the machine learning method. In another preferred embodiment of the invention, the measurement is carried out having the sample immersed in a liquid, in a gaseous medium or in a vacuum.

Throughout the description and in the claims, the word "comprises" and its variants are not intended to exclude other technical features, additives, components or steps. For those skilled in the art, other objects, advantages and features of the invention may be deduced from both the description and the practical use of the invention. The following examples and drawings are provided by way of illustration and are not intended to limit the present invention. Furthermore, the present invention covers all possible combinations of particular and preferred embodiments included herein.

**DESCRIPTION OF THE DRAWINGS**

Figure 1 shows a scanning electron microscopy image of a microlever used in force microscopy to measure cells (model Fastscan_D, Nano sensors).

Figure 2 shows an experimental example of a force versus distance curve obtained by AFM on a living HeLa type cell. (a). The force dependence can also be represented with respect to time (b). The tip indentation or displacement signal with respect to the cell is shown in (c). The curves have been acquired at a speed of 10 $\mu$m/s. The approach (outbound) and retreat (return) sections are shown.

Figure 3 shows examples of FDC curves generated theoretically by using the PLR model for a conical tip having an 18° semi-angle that approaches the cell at a speed of 10 $\mu$m/s and with different parameters as indicated on the panels. (a) Theoretical FDC curves for a material with $E_0$=1000 Pa and different flow coefficients (0.2, 0.4, 0.6). (b) Theoretical FDC curves for a material with $\gamma$=0.2 and different bulk moduli (1000, 5000 and 10000 Pa).

Figure 4 shows the adjustment of the experimental curves to the PLR model data for a conical tip to experimental curves taken at different speeds, 10 $\mu$m/s (a) and 300 $\mu$m/s (b) if a triangular profile is assumed for the indentation signal. The experimental curves are represented by solid lines and the theoretical adjustments by dashed lines.

Figure 5 shows an example of the general structure of the chained neural networks used in the patent.

Figure 6 shows examples of the normalised theoretical force curves to train the first neural network. Figure 6a shows force as a function of time. Figure 6b shows the indentation and figure 6c shows the velocity.

Figure 7 provides an example of how theoretical curves are sampled to train and/or validate the machine learning method.

Figure 8 shows the detailed structure of the chained neural networks used in the patent.

Figure 9 shows six examples of theoretical curves used for training and validation of the machine learning method.

Figure 10 shows the MAPE and NMRSE metrics when comparing a theoretical data set with the data obtained from the neural network.

Figure 11 shows four experimental curves obtained on HeLa cells. These figures have been extracted from a package of thousands of experimental curves.

Figure 12 is an example of sampling carried out on an experimental curve.

Figure 13 shows the MAPE (a) and NMRSE (b) metrics for FDC curves obtained experimentally in live HeLa type cells.

## PREFERRED EMBODIMENTS OF THE INVENTION

Reference numbers:

(1) Input data of the first neural network
(2) Hidden layers of the first neural network
(3) Input data of the second neural network
(4) Flow coefficient
(5) Intermediate layers of the second neural network
(6) Bulk modulus. Output data of the second network.
(7) Activation function

As described in the preceding sections, the present invention relates to a method based on the use of a neural network for quickly and automatically processing the FDC curves obtained by means of an AFM on viscoelastic materials and obtaining nanomechanical properties therefrom.
The process comprises three steps, training, validation and application of the neural network to a set of experimental measurements.
The training and validation of the neural network will be carried out on groups of theoretical curves determined using the viscoelastic model known as PLR. To do this, a large number of curves obtained for different values of the model parameters, bulk modulus and flow coefficient, as well as different thicknesses of the material, is generated.
The processing of the curves involves the normalisation of the variables to prevent the predictions from being affected by using curves of different force values, or by being generated by materials having different thickness. In particular, the force values of each curve used in training are normalised to the mean force value on that curve, and the material thickness is normalised with respect to the maximum indentation used to generate that curve ($I_{max}$). This type of normalisation will allow processing experimental curves with a very wide range of speeds (1-1000 $\mu$m/s) and thicknesses (100 nm-50 $\mu$m). Examples of the theoretical curves are shown in figure 6.
The adimensionalisation process can be expressed explicitly through the following transformations:

$$F(t) = c \sum_j \frac{\alpha_j}{\Gamma(1-\gamma)} \int_0^s (s-s')^{-\gamma} \beta_j i^{\beta_j - 1}(s') v(s') ds' = cf(s) \qquad (E.13)$$

$$c = E_0 \cdot t_r^{\,1-\gamma} \cdot I_r^{\,\beta-1} \cdot v_r \qquad (E.14)$$

$$F(t) \rightarrow \frac{F(t)}{\bar{F}} = \frac{f(s)}{\bar{f}} \qquad (E.15)$$

$$E_0 = c \cdot \frac{1}{t_r^{1-\gamma} \cdot I_r^{\beta-1} \cdot v_r} = \frac{\bar{F}}{\bar{f}} \cdot \frac{1}{t_r^{1-\gamma} \cdot I_r^{\beta-1} \cdot v_r} \qquad (E.16)$$

wherein $t_r$, $I_r$, $v_r$ are reference values with dimensions of time, distance and velocity, respectively.

The force values are sampled at constant time intervals (Figure 7). While the displacement or indentation signal was represented by the interpolation coefficients associated with the base of functions known as *splines.*

$$I(t) = \sum_{i=0}^{N} c_i B_{i,3}(x) \qquad (E.17)$$

This function base is defined by the following recurrence ratio:

$$B_{i,0}(x)$$
$$= \begin{cases} 1 & if \quad t_i \le x \le t_{i+k+1} \\ 0 & otherwise \end{cases} \qquad (E.18a)$$

$$B_{i,k}(x) = \frac{x - t_i}{t_{i+k} - t_i} B_{i,k-1}(x)$$
$$+ \frac{t_{i+k+1} - x}{t_{i+k+1} - t_{i+1}} B_{i+1,k-1}(x) \qquad (E18.b)$$

Furthermore, these functions meet the following property

$$\begin{cases} B_{i,k}(x) > 0 & if \quad t_i \le x \le t_{i+k+1} \\ B_{i,k}(x) = 0 & otherwise \end{cases} \qquad (E.19)$$

in this case the number of nodes *i* will be 15 and the degree of the polynomials *k* of 3. From the above, the indentation is developed on the base of *splines.*

To simplify the calculations, it is considered that $\varepsilon = 0$, which implies

$$I(0) = \sum_{i=0}^{N} c_i B_{i,3}(0) = c_0 B_{0,3}(0) = 0 \qquad (E.20)$$

The velocity of indentation is also expressed on the base of *splines* as:

$$I'(t) = \sum_{i=1}^{N} c_i {B'}_{i,3}(x) = \sum_{i,j=1}^{N} c_i M_{ij} B_{j-1,2}(x) = \sum_{i=1}^{N} d_i B_{j-1,2}(x) \qquad (E.21)$$

Wherein $M_{ij}$ is a square matrix *(N × N)* which relates the subspace of derivatives to the base of splines having degree 2. In particular, the inequalities presented in equation (E.8) can be met using the fact that the basis of splines is positive throughout its domain:

$$\begin{cases} I'(t) > 0 & if \quad t < p \\ I'(t) < 0 & if \quad t > p \end{cases} \Rightarrow \begin{cases} d_i > 0 & if \quad i < i^*(p) \\ d_i < 0 & if \quad i > i^*(p) \end{cases} \qquad (E.22)$$

Wherein $i^*$ is an index based on the position of the maximum ($p$) that takes into account the compact support of the function base. Although this solution is more restrictive than equation (E.8), it is more than enough to cover all experimental cases since the functions that leave this solution are extreme cases.

With the foregoing, equation E.7 takes the form of equation 23:

$$I'(p)$$

$$= \sum_{i=1}^{N} d_i B_{i-1,2}(p)$$

$$= 0 \qquad\qquad (E.23)$$

and equation 10 takes the form of equation 24:

$$I(1) - \epsilon' I(p) = \sum_{i=1}^{N} c_i [B_{i,3}(1) - \epsilon' B_{i,3}(p)]$$

$$= \sum_{j,i=1}^{N} d_j M_{ji}^{-1} [B_{i,3}(1) - \epsilon' B_{i,3}(p)] = 0 \qquad (E.24)$$

Finally, the normalisation condition $I(p) = 1$ is enforced. In principle, the absolute value of the coefficients $d_i$ is not limited. By enforcing this normalisation we can reduce this infinite space to a finite volume, such as $|di| \in$ (0,1), which is equivalent to the entire space under normalisation by dividing the coefficients by $I(p)$.

Summing up, the indentation signal sampling can be broken down into the following steps:

1. Selecting a value of $p$ and $\epsilon'$ in the range of experimental values. Defining the value of the corresponding index $i^*$.
2. Uniformly sampling $|d_i|$ values in the interval (0, 1) and assigning the corresponding sign according to equation 22
3. Solving the System of equations E.23 and E.24. Verifying that inequalities E.22 hold and that the solution verifies $|d_i| \leq 1$. Otherwise, repeating steps 2 and 3 until a solution is found that meets the same.

4. Defining the coefficients $\{c_i\}_{i=1}^{N}$ by calculating the inverse matrix $M_{ij}^{-1}$ and fixing $c_0 = 0$.
5. To complete the normalisation process, all the previous $c_i$ and $d_i$ coefficients are divided by

$$I(p) = \sum_{i=1}^{N} c_i B_{i,3}(p)$$

The aforementioned coefficients allow the indentation and velocity profiles to be functionally represented to include same as input data to the neural networks. A detailed description of the inputs, intermediate steps and outputs of the chained network system is shown in Figure 8.

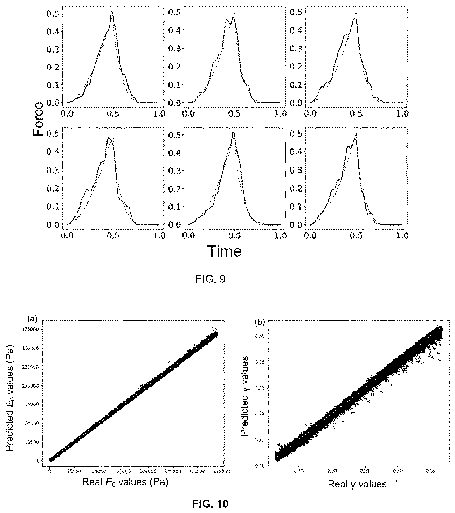

In a preferred embodiment of the invention, the chained network system of Figure 8 is trained with theoretical curves such as those shown in Figure 9. In a preferred embodiment of the invention the reference values are established as $t_r = t_{max}$, $I_r = I_{max}$ and $v_r = \bar{v}$, (average velocity). Figure 10a compares the results obtained by the neural network system for the bulk modulus obtained with that of the theoretical curve values. A great agreement is observed between them, quantified by a MAPE= 0.3%. Moreover, figure 10b shows the comparison between the theoretical values and those predicted by the network system for the flow coefficient, NRMSE= 1.3%. With the network system trained and validated, input values from experimental curves are used.

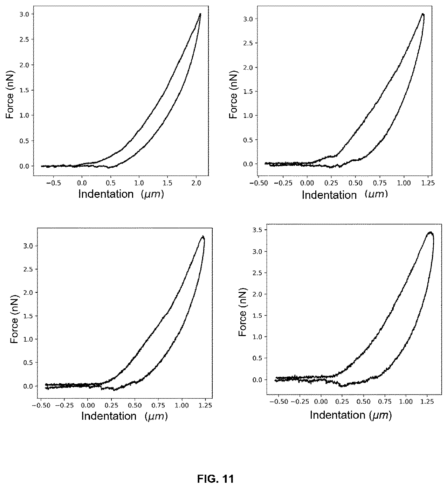

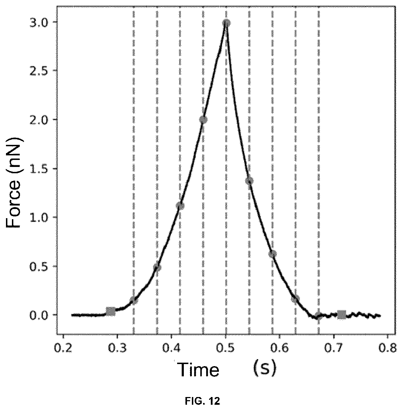

In a preferred embodiment of the invention, a set of experimental FDC curves obtained with an AFM on HeLa cells are delivered to the chained neuronal networks. Figure 11 shows four experimental curves extracted from a package of thousands of curves on which the nanomechanical properties thereof are to be defined. Figure 12 provides an example of how the experimental curves are sampled.

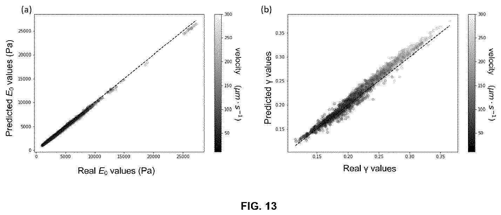

Figure 13a compares the results obtained by the neural network system for the bulk modulus with that of the values obtained by a numerical analysis. A great agreement is observed between them, quantified by a MAPE= 3.4%.

Moreover, figure 13b shows the comparison between the numerical values and those predicted by the network system for the flow coefficient, NRMSE= 4.6%.

**Claims**

1. A machine learning method for processing force versus distance curves obtained from viscoelastic materials using a force microscope, wherein the method comprises the steps of:

   a) generating a plurality of force versus training distance curves from the theoretical expressions of a model of a viscoelastic material;
   b) defining the parameters of the viscoelastic material using neural networks wherein:

   b.1) a first neural network is configured to define the flow coefficient of the viscoelastic material; and
   b.2) a second neural network is configured to define the bulk modulus of the viscoelastic material;
   such that the values of the flow coefficient of the material obtained in the first neural network are established as input values of the second neural network to define the bulk coefficient;

   c) quantifying the precision obtained in the definition of the flow coefficient and the bulk modulus of the viscoelastic material of step (b);
   d) completing the learning process when the value provided by the first and second neural networks reaches an error or deviation from the theoretical value of the flow coefficient and the bulk modulus of less than 5%; and
   e) applying the learning method obtained in step (d) on experimental force versus distance curves obtained with respect to the same viscoelastic material with which the training curves of step (a) have been carried out to obtain the values of the bulk modulus and flow coefficient of the viscoelastic material from its experimental curves.

2. The learning method according to claim 1 wherein the training curves are generated from a plurality of input parameters comprising, at least, the force, the material thickness values, the maximum indentation value and the time in which the tip of the force microscope is in contact with the viscoelastic material.

3. The learning method according to claim 1 comprising:

   using a metric of the averaged relative error: mean absolute percentage error (MAPE), to quantify the precision of the method in the value of the bulk modulus; and
   using the normalised standard deviation to quantify the precision obtained to estimate the flow coefficient.

4. The learning method according to any of the previous claims, wherein displacement or indentation signals are considered those signals that meet: (a) The signal is null at the beginning and at the end and always takes positive values; (b) the signal is divided into two sections, outbound and return; (c) the signal has a maximum; (d) spatial and time signals are normalised to 1, wherein te(0,1) and the maximum indentation is normalised to 1.

5. The learning method according to claim 4 comprising a step of normalisation of the variables of each force versus distance curve, wherein:

   the force values are normalised to the average value that the force takes in the outbound and return sections;
   the time is normalised to the value of the time when the maximum indentation tr,= tmax, is reached,
   the indentation is normalised to its maximum value Ir = Imax
   the velocity is normalised to its average value vr=v⁻.

6. The method according to any of the preceding claims, wherein the parameters of the experimental force versus distance curves are extracted using a linear viscoelastic model.

7. The method according to any of the preceding claims, wherein a viscoelastic model described by a relaxation function of the following type is used:

$$\psi(t) = E_0/\Gamma(1-\gamma)\left(\frac{t}{t_0}\right)^{-\gamma}$$

wherein $\Gamma$ is the Euler gamma function; t_0 is a reference time, as an example t0 = 1 s is taken and E0 is the bulk modulus; $\gamma$ is the flow coefficient.

8. The method according to any of the preceding claims, wherein the parameters of the experimental force versus distance curves are extracted using a viscoelastic model that includes ground effects.

9. The method according to any of the preceding claims, wherein the parameters of the experimental force versus distance curves are extracted from force curves that include the calculation of the contact area during the return curve using a Ting model.

10. The method according to any of the preceding claims, wherein the measurement is carried out having the sample immersed in a liquid, in a gaseous medium or in a vacuum.

11. The method according to any of the preceding claims wherein the viscoelastic material is samples of biological cells or tissues.

12. The method according to any of the preceding claims wherein the viscoelastic material is a polymer.

FIG. 1

**FIG. 2**

(a)

(b)

**FIG. 3**

(a)

(b)

**FIG. 4**

FIG. 5

FIG. 6

FIG. 7

FIG. 8

FIG. 9

FIG. 10

FIG. 11

FIG. 12

FIG. 13

## EUROPEAN SEARCH REPORT

**Application Number**

EP 24 38 2050

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 115 547 405 A (UNIV CHANGCHUN SCIENCE & TECH) 30 December 2022 (2022-12-30) <br> * figures 1-5 * <br> ----- | 1-12 | INV. <br> G01Q30/04 <br> G01Q60/36 <br> G06N3/045 |
| A,D | CHANDRASHEKAR ABHILASH ET AL: "Quantifying nanoscale forces using machine learning in dynamic atomic force microscopy", <br> NANOSCALE ADVANCES, <br> vol. 4, no. 9, 5 April 2022 (2022-04-05), <br> pages 2134-2143, XP093178765, <br> ISSN: 2516-0230, DOI: 10.1039/D2NA00011C <br> * paragraph [Experiments] * <br> ----- | 1-12 | G06V10/82 |

**TECHNICAL FIELDS SEARCHED (IPC)**

G01Q
G06V
G06N

The present search report has been drawn up for all claims

| Place of search | Date of completion of the search | Examiner |
|---|---|---|
| Berlin | 28 June 2024 | Polesello, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 38 2050

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2024

| Patent document cited in search report | Publication date | Patent family member(s) | Publication date |
|---|---|---|---|
| CN 115547405 A | 30-12-2022 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. GARCIA**. Nanomechanical mapping of soft materials with the atomic force microscope: methods, theory and applications. *Chem. Soc. Rep.*, 2020, vol. 49, 5850-5884
- **G. STAN** ; **S. W. KING**. Atomic force microscopy for nanoscale mechanical property characterization. *J. Vac. Sci. Technol. B*, 2020, vol. 38, 060801
- **M. KRIEG** ; **G. FLASCHNER** ; **D. ALSTEENS** ; **B. M. GAUB** ; **W.H. ROOS** ; **G.J.L. WUITE** ; **H. E GAUB** ; **C. GERBER** ; **Y. F DUFRÊNE** ; **D. J MÜLLER**. Atomic force microscopy-based mechanobiology. *Nature Reviews Physics*, 2019, vol. 1, 41-57
- **H.J. BUTT** ; **B. CAPELLA** ; **M. KAPPL**. Force Measurements with the Atomic Force Microscope: Technique, Interpretation and Applications. *Surf. Sci. Rep.*, 2005, vol. 59, 1-152
- **S. PRASAD** ; **A. RANKINE** ; **T. PRASAD** ; **P. SONG** ; **M. E. DOKUKIN** ; **N. MAKAROVA** ; **V. BACKMAN** ; **I. SOKOLOV**. Atomic Force Microscopy Detects the Difference in Cancer Cells of Different Neoplastic Aggressiveness via Machine Learning. *Adv. Nano-Biomed Res*, 2021, vol. 1, 2000116
- **K. ITO** ; **Y. OGAWA** ; **K. YOKOTA** ; **S. MATSUMURA** ; **T. MINAMISAWA** ; **K. SUGA** ; **K. SHIBA** ; **Y. KIMURA** ; **A. HIRANO-LWATA** ; **Y. TAKAMURA**. Host Cell Prediction of Exosomes Using Morphological Features on Solid Surfaces Analyzed by Machine Learning. *J. Phys. Chem. B*, 2018, vol. 122, 6224-6235
- **I. AZURI** ; **I. ROSENHEK-GOLDIANI** ; **N. REGEV-RUDZKI** ; **G. FANTNER** ; **S. R. COHEN**. The role of convolutional neural networks in scanning probe microscopy: a review. *Beilstein J. Nanotechnol.*, 2021, vol. 12, 878

- **L.T.P. NGUYEN** ; **B.H. LIU**. Machine learning framework for determination of elastic modulus without contact model fitting. *European Journal of Mechanics / A Solids*, 2022, vol. 94, 104579
- **L.T.P. NGUYEN** ; **B. H. LIU**. Machine learning framework for determination of elastic modulus without contact model fitting. *Inter. J. Solids and Structures*, 2022, vol. 256, 111976
- **A. CHANDRASHEKAR** ; **P. BELARDINELLI** ; **M. A. BESSA** ; **U. STAUFER** ; **F. ALIJANI**. Quantifying nanoscale forces using machine learning in dynamic atomic force microscopy. *Nanoscale Adv*, 2022, vol. 4, 2134
- **PD GARCIA** ; **CR GUERRERO** ; **R GARCIA**. Nano rheology of living cells measured by AFM-based force-distance curves. *Nanoscale*, 2020, vol. 12 (16), 9133-9143
- **J.G. SANCHEZ** ; **F.M. ESPINOSA** ; **R. MIGUEZ** ; **R. GARCIA**. The viscoelasticity of adherent cells follows a single power-law with distinct local variations within a single cell and across cell lines. *Nanoscale*, 2021, vol. 13, 16339-16348
- **P.D. GARCIA** ; **R. GARCIA**. Determination of the viscoelastic properties of a single cell cultured on a rigid support by force microscopy. *Nanoscale*, 2018, vol. 10, 19799-19809
- **T.C.T. TING**. The Contact Stresses Between a Rigid Indenter and a Viscoelastic Half-Space.. *J. Appl. Mech.*, 1996, vol. 33, 845-854